(19) Europäisches Patentamt
European Patent Office
Office européen des brevets

(11) **EP 0 786 530 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.7: **C22B 7/04**

(21) Anmeldenummer: **97890016.5**

(22) Anmeldetag: **28.01.1997**

(54) **Verfahren zur Gewinnung von flüssigem Leichtmetall aus einer dispersen Mischung**

Process for the recovery of liquid light metal from a dispersed mixture

Procédé pour la récupération de métal léger fondu à partir d'un mélange dispersé

(84) Benannte Vertragsstaaten:
**BE DE ES FR GB GR IT LU NL SE**

(30) Priorität: **29.01.1996 AT 16096**

(43) Veröffentlichungstag der Anmeldung:
**30.07.1997 Patentblatt 1997/31**

(73) Patentinhaber: **Machner & Saurer GmbH**
**8641 St. Marein (AT)**

(72) Erfinder: **Kos, Bernd Dr.**
**8700 Leoben (AT)**

(56) Entgegenhaltungen:
EP-A- 0 626 458       EP-A- 0 646 654
WO-A-93/01321        GB-A- 954 512
GB-A- 2 228 014      US-A- 4 040 820
US-A- 4 137 073      US-A- 4 938 457
US-A- 5 030 273      US-A- 5 421 850

**Beschreibung**

Die Erfindung bezieht sich auf ein Verfahren zur Gewinnung der metallischen Phase aus einer dispersen Mischung bestehend aus mindestens einem Leichtmetall, insbesondere Aluminium, oder aus einer Legierung aus diesem(n) Metall(en) und aus zumindest einer nichtmetallischen Phase, gebildet aus zumindest einem Oxid oder einer Oxidverbindung und/oder anderen Verbindungen von diesem(n) Metall(en), gegebenenfalls einem oder mehreren weiteren Stoff(en), z.B. Salzen oder Salzmischungen und dergleichen, bei höheren Temperaturen, insbesondere aus bei Verfahren zur Erzeugung, Verarbeitung sowie Rückgewinnung von Aluminium und Aluminiumlegierungen anfallenden Krätzen bei Anwendung von Beschleunigungskräften. Die Erfindung umfaßt weiters eine Vorrichtung , insbesondere zur Durchführung obigen Verfahrens, im wesentlichen ge bildet aus einem dreh- und kippbaren metallurgischen Gefäß.

Eine Erschmelzung und insbesondere eine Verarbeitung von Leichtmetallen wie Aluminium, Silizium, Magnesium und dergleichen Legierungen im schmelzflüssigen Zustand sowie ein Rückgewinnen dieser Metalle durch Einschmelzen von Schrott und dergleichen Materialien an Luft bewirken eine Oxidation und eine Nitridbildung an der Oberfläche der einschmelzenden Stücke und der Schmelze, weil Leichtmetalle eine hohe Affinität zu Sauerstoff und Stickstoff besitzen. Die entstehenden Oxide und nichtmetallischen Phasen bilden sich mit kantig-körniger Makrostruktur aus und haben ein höheres spezifisches Gewicht als die Metalle. Die Oberflächenspannung von flüssigem Leichtmetall und insbesondere die Grenzflächenspannung zu den hochschmelzenden Oxiden sowie die Hohlräume zwischen den Körnem bewirken jedoch ein Schwimmen der nichtmetallischen Phase auf dem flüssigen Metall trotz des vergleichsweise höheren spezifischen Gewichtes.

Die Oberflächen- und Grenzflächenspannung "flüssiges Metall /feste Nichtmetallkömer" bewirken aber auch, daß Metallpartikel zwischen den nichtmetallischen Körnern gehalten werden, wodurch die auf dem flüssigen Metallbad gebildete bzw. befindliche Schlacke, eine sogenannte Krätze, einen hohen Metallgehalt, der oft bis zu 80 Gew.-% betragen kann, besitzt. Bei einem Abziehen der Krätze von der Schmelzbadoberfläche wird dadurch wertvolles Metall ausgebracht, was bei einer Deponierung der Krätze wirtschaftliche Nachteile und auch ökologische Probleme bewirken kann.

Seit den Anfängen der technischen Verwendung von Leichtmetallen in höherem Ausmaß und einem Einsatz von schmelzmetallurgischen Verfahren waren die Bestrebungen groß, die metallische Phase aus der eine disperse Mischung darstellenden Krätze oder Schlacke zu gewinnen.

Um den Metallgehalt der Krätze zu verringern, ist es möglich, dieser Salz beizumischen. Diese Maßnahme ist zwar teilweise durchaus erfolgreich, das niedrigschmelzende Salz und die Verbindungen sind jedoch zumeist nicht wirtschaftlich wiederverwertbar sowie wasserlöslich und erbringen große Schwierigkeiten bei der Handhabung und der Entsorgung.

Es wurde auch vorgeschlagen ( US.PS 4 040 820), auf den Zusatz von Salzen zu verzichten und in einem beheizbaren horizontalen Drehrohrofen Krätzen zu entmetallisieren. Durch eine taumelnde, langsame Bewegung der Krätze bzw. der dispersen Mischung im Ofen sollen die Metallpartikel zusammengeführt, zu einem Flüssigmetallteil vereinigt und dieser abgegossen werden. Dabei war jedoch der Entmetallisierungsgrad der Mischung gering und es ergaben sich auch wirtschaftliche Probleme.

Gemäß der US-PS 5 421 850 wurde vorgeschlagen, in einem gleichfalls im wesentlichen horizontal angeordneten Rotierofen ebenso salzfrei zu arbeiten, in diesen Krätze einzusetzen, diese durch Plasmaheizung auf eine Temperatur über der Liquidustemperatur des Metalles zu erhitzen und mittels einer Mischbewegung die darin befindlichen Metallteilchen zu agglomerieren und miteinander zu vereinigen. Einer Klumpenbildung des Einsatzes sollte durch verschiedene Drehzahlen des Rohrofens entgegengewirkt werden, wobei der gebildete metallische Teil durch ein Abstichloch und der verbleibende Restteil der Krätze durch Auskratzen bei geringem Neigen des Ofens ausgetragen werden. Nachteilig sind dabei der hohe Aufwand und ein nicht ausreichend hoher Entmetallisierungsgrad der dispersen Mischung.

Aus GB-2 228 014 A ist ein Verfahren bekannt geworden, bei welchem in einem senkrechten Drehrohrofen mittels Plasmaenergie bzw. Plasmabrenner Krätze oder Aluminiumschrott erwärmt, teilweise geschmolzen und durch Rotation des Ofens ein Agglomerieren der flüssigen Metallteilchen bewirkt werden und damit ein Entmetallisieren der dispersen Mischung erfolgt, wobei metallisches Aluminium und Tonerde, also Aluminiumoxid, anfallen. Als Plasmagas wird Luft oder Luft, welche mit Sauerstoff, Stickstoff und dergleichen Gase, welche mit Aluminium reagieren, insbesondere mit oxidierend wirkenden Gasen, angereichert ist, verwendet. Durch eine exoterme Reaktion mit dem Plasmagas wird zwar die Wärm-und Schmelzzeit des Einsatzes verringert, es entsteht jedoch ein Metallverlust durch einen Abbrand bzw. Oxidation und damit ist zumeist eine Entstaubung der Abgase erforderlich und das Metallausbringen ist verringert.

Weiters sind Verfahren zur Gewinnung der metallischen Phase aus einer dispersen Mischung bekannt geworden, bei welchen das flüssige Metall koalesziert und nachfolgend erstarrt. Gemäß WO-A2-93/01321 wird in einer ersten Stufe in einer Kokille ein Desintegrieren der auf erhöhter Temperatur befindlichen Mischung und ein Koaleszieren des flüssigen Metallanteiles durch Zentrifugierenbewerkstelligt, wonach in einer zweiten Stufe ein Erstarren des Metalles zu einem Hohlkörper erfolgt. Eine Verbesserung und Vereinfachung eines derartigen Verfahrens ist erreichbar ( EP-626 458 A1), wenn die disperse Mischung mit hoher Temperatur bei Anwendung einer Beschleunigung in einer Kokille in einem Schritt desintegriert wird, die metallische Phase koalesziert und im Bereich der Kokillenfläche gesammelt, gekühlt sowie erstarren gelassen wird.

Um eine Entmetallisierung von dispersen Mischungen aus Leichtmetall und nichtmetallischen Phasen zu verbessem,ist, wie aus der AT 400 448 B bzw. EP-646 654 A1 bekannt, die Mischung unter Bildung eines Einsatzes in ein Aufbereitungsbzw. Vorbereitungsgefäß einzubringen, der Einsatz zu überhitzen, eine gleichmäßige Temperaturverteilung einzustellen und durch Bewegung die Phasen dispergiert zu halten, wonach der homogenisierte Einsatz aus dem Vorbereitungsgefäß ausgetragen und in eine Desintegrationseinrichtung eingebracht wird. Dabei können jedoch der hohe maschinentechnische Aufwand und der komplexe Verfahrensablauf als nachteilig angesehen werden.

Alle bisher bekannt gewordenen Entmetallisierungsverfahren sowie Einrichtungen zur Durchführung einer Entmetallisierung von dispersen Mischungen, insbesondere von Krätzen, erbringen ein unzureichend hohes Metallausbringen und/oder benötigen dazu einen großen maschinentechnischen Aufwand und/oder weisen bei einem Wiedereinsetzen des Metalles in eine Schmelze einen schlechten thermischen Wirkungsgrad auf und können zumeist Probleme bei einer Reststoffentsorgung nicht ausreichend vermeiden

Hier will die Erfindung Abhilfe schaffen und setzt sich zum Ziel, die Nachteile der bekannten Metallrückgewinnungsverfahren zu beseitigen und ein Verfahren anzugeben, mit welchem auf einfache Weise, mit hohem Entmetallisierungsgrad einer dispersen Mischung Leichtmetall in flüssiger Form rückgewonnen und z.B. in eine Metallschmelze wieder eingesetzt werden kann. Eine dafür konzipierte Vorrichtung ist einfach aufgebaut sowie kompakt, weist eine geringe Bauhöhe auf und ermöglicht einen wirtschaftlichen Verfahrensablauf.

Das Ziel wird bei einem Verfahren der eingangs genannten Art durch die im Anspruch 1 angegebene Schrittfolge.

Die mit der Erfindung erreichten Vorteile bestehen im wesentlichen darin, daß in nur einem metallurgischen Gefäß durch eine aufeinander abgestimmte Verfahrensschrittfolge auf einfache und wirtschaftliche Weise ein hoher Entmetallisierungsgrad von dispersen Mischungen aus Leichtmetall und nichtmetallischen Phasen erreicht werden kann. Dabei erfolgt durch ein Einsetzen , ein Einstellen auf eine gewünschte Temperatur, ein Erstellen einer hohen Fließfähigkeit und ein gleichmäiges Verteilen um die Rotationsachse eine entsprechende Vorbereitung der dispersen Mischung im Gefäß, um nachfolgend einen hohen Entmetallisierungsgrad erreichen zu können, weil dadurch gute Desintegrierungsbedingungen im Einsatz bzw. in der Mischung eingestellt werden. In den Folgeschritten, wobei jeweils in den vorangegangenen Schritten die notwendigen Voraussetzungen für eine hohe Verfahrenseffizienz geschaffen werden, ist die Anwendung eines bestimmten Radialbeschleunigungszyklus wichtig für eine im wesentlichen vollständige Entmetallisierung der dispersen Mischung. Dabei ist besonders wichtig, den Auf- und insbesondere den Abbau der Radialbeschleunigung zu kontrollieren, wodurch es überraschend möglich ist, eine Rückmischung des Metalles in den Bereich der nichtmetallischen Phasen zu vermeiden und letztlich die metallische Phase allein ausgießen zu können. Dafür kann in einfacher Weise der nichtmetallische Teil vorerst mit einer Art Fuchs oder Siphon zurückgehalten werden, worauf erst nach dem erfolgten Metallausgießen die nichtmetallischen Verbindungen leicht ausgetragen oder ausgeleert werden können. Es ist jedoch auch möglich, wenn zum Beispiel auf Grund unrichtiger Parametereinstellung bei den Verfahrensschritten, der Entmetallisierungsgrad des Verfahrens unzureichend war, den Einsatz im metallurgischen Gefäß zu belassen, gegebenenfalls einen weiteren Einsatz dazuzugeben und darauf folgend wiederum ein Entmetallisierungsverfahren mit der erfindungsgemäßen Schrittfolge ablaufen zu lassen, um höchstes Flüssigmetallausbringen zu erreichen. Besonders vorteilhaft ist es, wenn das Erwärmen sowie das Homogenisieren und Einstellen der Fließfähigkeit der dispersen Mischung mit einer Radialbeschleunigung derselben von höchstens 0,39 g bei bzw. durch Drehen des metallurgischen Gefäßes mit einer Drehaxenneigung zur Vertikalen von 85 bis 45 ½ °, vorzugsweise 45 bis 20 ½ °, durchgeführt wird, weil dadurch die Homogenisierungsbedingungen besonders gut eingestellt werden.

Obwohl bei einem vertikalen Drehen des metallurgischen Gefäßes eine durch die Erdanziehung hervorgerufene, eine Entmetallisierung fördernde überlagerte Rüttelbeaufschlagung des Einsatzes nicht erfolgt, wurde, für den Fachmann völlig überraschend, gefunden, daß das Verfahren wirkungsmäßig besonders günstig und leicht ausführbar ist, wenn die disperse Mischung einer entmetallisierenden Radialbeschleunigung im wesentlichen in eine Richtung senkrecht zur Erdbeschleunigung unterworfen wird. Dabei ist es wichtig, daß nach einem Entmetallisieren bei im wesentlichen vertikaler Axlage des metallurgischen Gefäßes die Radialbeschleunigung auf den Wert 0 gebracht wird, um einen neuerlichen Mischeffekt der Phasen zu verhindern. Weiters kann es vorteilhaft sein, wenn in einfacher Weise vorerst die metallische Phase durch die Einsatzöffnung des metallurgischen Gefäßes mittels Kippens desselben ausgegossen wird. Schließlich kann es sich im folgenden als günstig für ein hohes Metallausbringen erweisen, wenn, wie vorher angeführt, nach dem Ausgießen der metallischen Phase der im metallurgischen Gefäß verbleibende Teil nicht ausgetragen sondern einer weiteren Radialbeschleunigung unterworfen wird.

Eine Zur Durchführung des erfindungsgemä-

ßen Verfahrens geeignete Vorrichtung weist ein im wesentlichen rotationssymmetrisch ausgeformtes metallurgisches Gefäß mit einer Kippeinrichtung auf, welche zwei oder mehr als zwei Arbeitspositionen mit jeweils unterschiedlicher Axrichtung bzw. Axneigung und einem Gesamt- Kippwinkel des Gefäßes von mindestens 106 ⅔ ° aufweist, und mit zwei oder mehr als zwei Geschwindigkeiten um die Axe drehend antreibbar ist.

Eine derartig gebildete Einrichtung kann nicht nur in einer kompakten Bauweise erstellt werden, sondern ist auch anwendungstechnisch von höchster Flexibilität und Wirksamkeit.

Sowohl eine abgekühlte disperse Mischung als auch unmittelbar anfallende Krätze sind in einem Gefäß mit hoher Haltbarkeit der Gefäßwand mit höchstem Entmetallisierungsgrad verarbeitbar, wenn der Innenraum des metallurgischen Gefäßes und/oder die darin befindliche disperse Mischung beheizbar ist (sind) und wenn das Gefäß feuerfest zugestellt ist.

Wenn weiters das metallurgische Gefäß im Kippbereich zumindest eine Arbeitsposition für ein wälzendes Mischen des Einsatzes mit einem Winkel (β) der Drehaxe im Bereich von 85 bis 45 ⅔ ° zur Vertikalen aufweist und eine im wesentlichen senkrechte Arbeitsposition für ein Aufbringen einer desintegrierenden Radialbeschleunigung besitzt, sind sowohl ein vorteilhaftes Umwälzen zur Erlangung eines raschen Temperaturanstieges bzw. einer raschen Temperatureinstellung als auch ein wirkungsvolles Homogenisieren und eine Einstellung hoher Fließfähigkeit des Einsatzes möglich und gute Voraussetzungen für gleichmäßiges Verteilen der Mischung und eine wirkungsvolle Desintegration derselben gewährleistet. Dabei ist es von besonderem Vorteil, wenn das metallurgische Gefäß in zumindest einer für das wälzende Mischen des Einsatzes vorgesehenen Arbeitsposition mit einer Umdrehungszahl $N_1$ in( 1/sek) antreibbar ist, welche kleiner ist als ein Rechenwert gemäß Formel

$$N_1 = Y \cdot \sqrt{\frac{2}{A}}$$

wobei, wobei Y eine Mischungskonstante mit einer Maßzahl von 12.12 und der Wert A den Innendurchmesser des Gefäßes in ( m ) darstellen und wenn in weiterer Ausgestaltung der Erfindung das metallurgische Gefäß in der im wesentlichen senkrechten Arbeitsposition mit einer Umdrehungszahl ($N_2$) in (1/sek)antreibbar ist, welche größer ist als der Rechenwert gemäß Formel

$$N_2 = X \cdot \sqrt{\frac{2}{A}}$$

wobei X eine Separationskonstante mit einer Maßzahl von 28.55 und der Wert A den Innendurchmesser des Gefäßes in (m) darstellen.

Nicht nur der Verfahrensablauf sondern auch der Abscheidungswirkungsgrad des Metalles können damit entscheidend verbessert werden.

Schließlich kann für eine wirkungsvolle Trennung der Phasen von Vorteil sein, wenn zumindest für ein Ausgießen der metallischen Phase aus dem metallurgischen Gefäß dessen Einsatzöffnung durch Abdeckmittel teilweise verschließbar ist.

Im folgenden wird die Erfindung anhand von lediglich einen Ausführungsweg darstellenden Zeichnungen näher erläutert.
Es zeigt

Fig. 1 eine schematische Seitenansicht einer für das erfindungsgemäße Verfahren geeigneten Vorrichtung

Fig. 2 und Fig. 3 eine Seitenansicht und eine Frontansicht der Einrichtung in einer Umweltschutzkabine

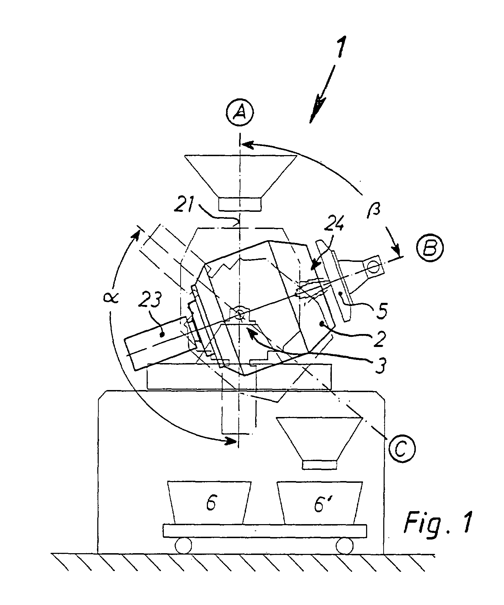

In Fig. 1 ist ein metallurgisches Gefäß 2 in einer Arbeitsposition B dargestellt, wobei zwei weitere Arbeitspositionen und zwar eine Position A mit einer senkrecht ausgerichteten Axe 21 mit einer Einsatzöffnung 24 nach oben gerichtet und eine schräge Position C, bei welcher die Einsatzöffnung 24 mit einer um einen Winkel α zur Senkrechten gedrehten Axlage nach unten gerichtet ist, angedeutet sind. Ein erfindungsgemäßes Verfahren kann in einer Folge derart ablaufen, daß gegebenenfalls in einer Position B ein Gefäß 2 mit einem Brenner 5 vorgewärmt wird, wobei eine Anstellung desselben über eine Gefäßeintrittsöffnung 24 durchführbar ist. Nach einer gewünschten Vorwärmung des Mauerwerkes 22 erfolgt ein Entfernen der Heizeinrichtung 5 von der Einsatzöffnung 24 und ein Kippen bzw. Schwenken des Gefäßes 2 in eine im wesentlichen vertikale Position A der Axe 21, in welcher gegebenenfalls Krätze oder dergleichen durch zum Beispiel einen Trichter 71 über die Einsatzöffnung 24 in das Gefäß 2 eingebracht wird. Nach einem Einbringen eines Einsatzes erfolgt ein Kippen des Gefäßes 2 in eine Axposition B und weiters ein Drehen desselben um die Axe 21, bewirkt durch ein Drehmittel 23, zum Beispiel einen regelbaren Getriebemotor. Diese, einer Homogenisierung und Einstellung hoher Fließfähigkeit der dispersen Mischung dienende Drehbewegung des Gefäßes 2 in der Axposition B , während welcher ein Erwärmen durch einen Brenner 5 oder ein Kühlen durch Kalteinbringung von Frischkrätze vorgenommen werden kann, wird mit einer Radialbeschleunigung des Einsatzes von unter 0,39 g durchgeführt.Ein nachfolgendes Schwenken des Gefäßes 2 in eine im wesentlichen senkrechte Arbeitsposition A kann bei geringerer Radialbeschleunigung durchgeführt werden, weil dadurch ein gleichmäßiges Verteilen des fluidisierten Einsatzes um die Rotationsaxe 21 unterstützt wird. In senkrechter Axposition A erfolgt eine Drehzahlerhöhung und damit ein Aufbau einer Radialbeschleunigung der Mischung auf einen Wert von mehr als 1 g. Diese hohe Radialbeschleunigung, welcher Wert auch bis zu 26 % pulsierend geändert werden kann, wird mindestens 0,015 Stunden aufrechterhalten, um eine im wesentlichen vollständige Desintegration der Phasen bzw. eine Entmetallisierung des Einsatzes zu erreichen, wonach eine Drehzahlemiedrigung bis zum Stillstand in einer Zeitspanne von größer als 0,03 Stunden erfolgt. Höhere Bremsraten des rotierenden Gefäßes 2 bewirken meist eine Rückmischung der desintegrierenden Phasen. Bei einem Stillstehen des Gefäßes 2 wird dieses mit seiner Einsatzöffnung 24 nach unten, zum Beispiel in eine Axrichtung C , gekippt, die nichtmetallischen Phasen im Gefäß zurückgehalten und das flüssige Metall in eine Pfanne 6' ausgegossen. Danach kann ein Pfannenwagen verfahren und die nichtmetallischen bzw. entmetallisierten Phasen nach Entfernung des Rückhaltemittels in eine weitere Pfanne 6 ausgetragen werden.

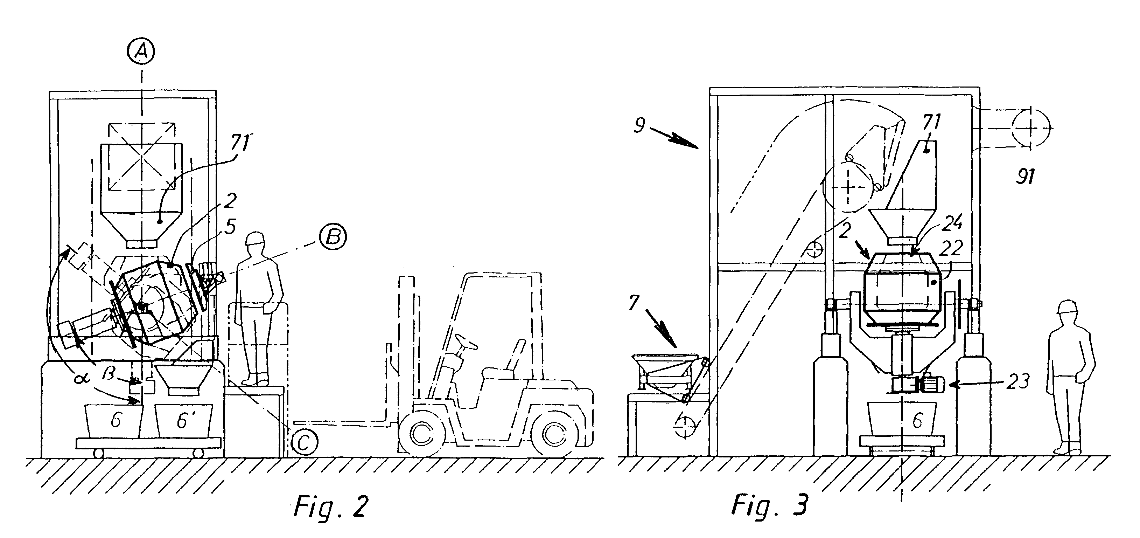

Fig. 2 und Fig. 3 zeigen eine Seitenansicht und eine Frontansicht einer Einrichtung mit einer Chargieroder Einbringungseinrichtung 7. Eine disperse Mischung wird von einem Aufgabebehälter 7 über ein Zuführungsmittel 71 in eine Einsatzöffnung 24 eines mit feuerfestem Material 22 zugestellten Gefäßes 2 eingebracht.. Zur Vermeidung einer Umweltbelastung ist die Anlage in einer Abkapselung 9 mit einem Gasaustrag 91 errichtet.

## Patentansprüche

1.  Verfahren zur Gewinnung der metallischen Phase aus einer dispersen Mischung bestehend aus mindestens einem Leichtmetall, insbesondere Aluminium, oder aus einer Legierung aus diesem(n) Metall(en) und aus zumindest einer nichtmetallischen Phase, gebildet aus zumindest einem Oxid oder einer Oxidverbindung und/oder anderen Verbindungen von diesem(n) Metall(en), gegebenenfalls einem oder mehreren weiteren Stoff(en), zum Beispiel Salzen oder Salzmischungen und dergleichen, bei höheren Temperaturen, insbesondere aus bei Verfahren zur Erzeugung, Verarbeitung sowie Rückgewinnung von Aluminium und Aluminiumlegierungen anfallenden Krätzen mittels Beschleunigungskräften bei Verwendung eines dreh- und kippbaren sowie gegebenenfalls beheizbaren metallurgischen Gefäßes , **gekennzeichnet durch** die Schrittfolge:

    Ausrichten des metallurgischen Gefäßes in eine vertikale Axposition (A) und

    Einsetzen der dispersen Mischung

    Schwenken bzw. Kippen des metallurgischen Gefäßes in eine Axposition (B) mit einem Winkel von 85 bis 45 ⅔ ° zur Vertikalen und Erwärmen und/oder Einstellen des Einsatzes auf eine Temperatur von 20 bis 250°C über die Liquidustemperatur der Metallphase

Homogenisieren und Erstellen hoher Fließfähigkeit des Einsatzes **durch** wälzendes Mischen in gleicher Axposition (B) mit einer Radialbeschleunigung desselben von höchstens 0,39g

Schwenken des metallurgischen Gefäßes in die im wesentlichen vertikale Axposition (A) und gleichmäßiges Verteilen der fließfähig erstellten dispersen Mischung um die Rotationsachse

Aufbau einer Radialbeschleunigung der Mischung von mindestens 1 g in dieser Axlage (A) des Gefäßes Aufrechterhalten der Radialbeschieunigung während mindestens 0,015 Stunden zur Entmetallisierung bzw. Desintegration

Abbau der Radialbeschleunigung auf den Wert 0 in einer Zeitspanne von größer als 0,03 Stunden

Schwenken des metallurgischen Gefäßes von der vertikalen Axlage (A) in eine Axlage (C) mit einem Winkel von mindestens 106 ⅔ ° und Ausgießen der metallischen Phase aus dem metallurgischen Gefäß

Austrag der nichtmetallischen Phase(n) aus dem metallurgischen Gefäß gegebenenfalls bei weiterem Schwenken desselben

2.  Verfahren nach Anspruch 1, **dadurch gekennzeichnet, daß** die metallische Phase durch die Einsatzöffnung des metallurgischen Gefäßes ausgegossen wird.

3.  Verfahren nach einem der Ansprüche 1 oder 2, **dadurch gekennzeichnet, daß** nach dem Ausgießen der metallischen Phase der im metallurgischen Gefäß verbleibende Teil einer weiteren Radialbeschleunigung unterworfen wird.

4.  Verfahren nach einem der Ansprüche 1 bis 3, durchgeführt in einer Vorrichtung welche ein im wesentlichen rotationssymmetrisch ausgeformtes metallurgisches Gefäß (2) mit einer Kippeinrichtung (3) mehr als zwei Arbeitspositionen (A,B,C) mit jeweils unterschiedlicher Axrichtung bzw. Axneigung zur Vertikalen und einem Gesamt-Kippwinkel (α) des Gefäßes von mindestens 106 ⅔ °, vorzugsweise 121 ⅔ ° aufweist und mit zwei oder mehr als zwei Geschwindigkeiten um die Axe (21) drehend antreibbar ist, wobei das metallurgische Gefäß (2) im Kippbereich ($\alpha$) zumindest eine Arbeitsposition (B) für ein wälzendes Mischen des Einsatzes mit einem Winkel ($\beta$) der Drehaxe (21) im Bereich von 85 bis 45⅜° zur Vertikalen aufweist und eine im wesentlichen senkrechte Arbeitsposition (A) für ein Aufbringen einer desintegrierenden Radialbeschleunigung besitzt.

5. Verfahren nach Anspruch 4, **dadurch gekennzeichnet, daß** das metallurgische Gefäß (2) in zumindest einer für das wälzende Mischen des Einsatzes vorgesehenen Arbeitsposition (B) mit einer Umdrehungszahl $N_1$ in (1/sek) antreibbar ist, welche kleiner ist als der Rechenwert gemäß Formel

$$N_1 = Y \cdot \sqrt{\frac{2}{A}}$$

wobei Y eine Mischkonstante mit einer Maßzahl von 12.12 und der Wert A den Innendurchmesser des Gefäßes in (m) darstellen.

6. Verfahren nach einem der Ansprüche 4 oder 5, **dadurch gekennzeichnet, daß** das metallurgische Gefäß (2) in der im wesentlichen senkrechten Arbeitsposition (A) von einem Antrieb (23) mit einer Umdrehungszahl ($N_2$) antreibbar ist, welche größer ist als der Rechenwert gemäß Formel

$$N_2 = X \cdot \sqrt{\frac{2}{A}}$$

wobei X eine Separationskonstante mit einer Maßzahl von 28.55 und der Wert A den Innendurchmesser des Gefäßes in (m) darstellen.

7. Verfahren nach einem der Ansprüche 4 bis 6, **dadurch gekennzeichnet, daß** zumindesgt für ein Ausgießen der metallischen Phase aus dem metallurgischen Gefäß (2) dessen Einsatzöffnung (23) durch Abdeckmittel (4) teilweise verschließbar ist.

**Claims**

1. A process for the recovery of the metal phase from a dispersed mixture comprising at least one light metal, in particular aluminium, or an alloy comprising this/these metal(s) and at least one non-metallic phase, formed from at least one oxide or an oxide compound and/or other compounds of this/these metal(s), optionally one or more further materials, for example salts or salt mixtures and the like, at relatively high temperatures, in particular from dross resulting from processes for the production, working and recovery of aluminium and aluminium alloys, by means of acceleration forces using a rotatable and tiltable, optionally heatable, metallurgical vessel, **characterised by** the following sequence of steps:

adjusting the metallurgical vessel into a vertical axial position (A) and

charging the dispersed mixture,

pivoting or tilting the metallurgical vessel into an axial position (B) at an angle of 85° to 45° to the vertical and

heating and/or setting the charge to a temperature of 20°C to 250°C above the liquid temperature of the metal phase, homogenising and establishing high fluidity of the charge by rolling mixing in the same axial position (B) with radial acceleration of the same of at most 0.39 g,

pivoting the metallurgical vessel into the substantially vertical axial position (A) and uniformly distributing the fluidised dispersed mixture about the rotational axis,

building up radial acceleration of the mixture of at least 1 g in this axial position (A) of the vessel,

maintaining the radial acceleration for at least 0.015 hours for demetallisation or disintegration,

reducing the radial acceleration to 0 over a period of more than 0.03 hours,

pivoting the metallurgical vessel from the vertical axial position (A) into an axial position (C) at an angle of at least 106° and pouring the metal phase out of the metallurgical vessel,

discharging the non-metallic phase(s) from the metallurgical vessel, with further pivoting thereof if necessary.

2. A method according to claim 1, **characterised in that** the metal phase is poured out through the charging opening of the metallurgical vessel.

3. A method according to either one of claims 1 and 2, **characterised in that**, after the metal phase has been poured out, the portion remaining in the metallurgical vessel undergoes further radial acceleration.

4. A method according to any one of claims 1 to 3, carried out in a device (1) comprising a substantially rotationally symmetrically formed metallurgical vessel (2) with a tilting arrangement (3) which has more than two operating positions (A, B, C), each with a different axial direction or axial inclination to the vertical and a total tilting angle ($\alpha$) of the vessel of at least 106°, preferably 121°, and which is rotatably drivable about the axis (21) at two or more speeds, wherein, in the tilting range ($\alpha$), the metallurgical vessel (2) has at least one operating position (B) for rolling mixing of the charge with an angle ($\beta$) of the rotation axis (21) in the range from 85° to 45° to the vertical, and a substantially vertical operating position (A) for the application of disintegrating radial acceleration.

5. A method according to claim 4, **characterised in that** the metallurgical vessel (2) is drivable in at least one operating position (B), provided for the rolling mixing of the charge, at a rotational speed $N_1$ in (1/sec) which is lower than the calculated value according to the formula

$$N_1 = Y \cdot \sqrt{\frac{2}{A}}$$

where Y is a mixing constant with a value of 12.12 and A represents the inner diameter of the vessel in (m).

6. A method according to either one of claims 4 and 5, **characterised in that** the metallurgical vessel (2) in the substantially vertical operating position (A) is drivable by a drive (23) at a rotational speed ($N_2$) which is greater than the calculated value according to the formula

$$N_2 = X \cdot \sqrt{\frac{2}{A}}$$

where X is a separation constant with a value of 28.55 and A represents the inner diameter of the vessel in (m).

7. A method according to any one of claims 4 to 6, **characterised in that**, at least for pouring the metal phase out of the metallurgical vessel (2), its charging opening (24) is partially closable by covering means (4).

### Revendications

1. Procédé d'extraction de la phase métallique hors d'un mélange dispersé composé d'au moins un métal léger, notamment d'aluminium, ou d'un alliage de ce ou ces métaux et d'au moins une phase non métallique, formée au moins d'un oxyde ou d'une liaison oxydique et/ou d'autres liaisons de ce ou ces métaux, le cas échéant d'une ou plusieurs autres matières, par exemple des sels ou des mélanges de sels et analogue, à des températures élevées, notamment hors de crasses produites au cours du processus de production, de traitement et de récupération de l'aluminium et des alliages d'aluminium, au moyen de forces d'accélération en utilisant un récipient métallurgique qui peut tourner, basculer et, le cas échéant, être chauffé, **caractérisé par** la séquence :

orientation du récipient métallurgique dans une position axiale verticale (A) ; et
enfournage du mélange dispersé ;
inclinaison ou basculement du récipient métallurgique dans une position axiale (B) formant un angle de 85 à 45 degrés par rapport à la verticale et
chauffage et/ou réglage de la charge à une température de 20 à 250 °C au-dessus de la température de liquides de la phase métallique ;
homogénéisation et établissement d'une fluidité élevée de la fournée par mélangeage rotatif dans la méme position axiale (B) avec une accélération radiale maximale de ladite fournée de 0,39 g ;
inclinaison du récipient métallurgique dans la position axiale sensiblement verticale (A) et répartition régulière du mélange dispersé rendu fluide autour de l'axe de rotation ;
production d'une accélération radiale du mélange jusqu'à au moins 1 g dans cette position axiale (A) du récipient ;
maintien de l'accélération radiale pendant au moins 0,015 heure pour effectuer la démétallisation ou la désintégration ;
diminution de l'accélération radiale jusqu'à la valeur 0 dans un laps de temps supérieur à 0,03 heure ;
inclinaison du récipient métallurgique de la position axiale verticale (A) dans une position axiale (C) formant un angle d'au moins 106 degrés et déversement de la phase métallique hors du récipient métallurgique ;
défournage de la ou des phases non métalliques hors du récipient métallurgique, le cas échéant par inclinaison accrue de ce dernier.

2. Procédé selon la revendication 1, **caractérisé en ce que** la phase métallique est déversée par l'orifice de charge du récipient métallurgique.

3. Procédé selon l'une des revendications 1 ou 2, **caractérisé en ce qu'**après le déversement de la phase métallique, la partie restant dans le récipient métallurgique est soumise à une autre accélération radiale.

**4.** Procédé selon l'une des revendications 1 à 3 mis en oeuvre dans un dispositif qui comporte un récipient métallurgique (2) ayant sensiblement une forme à symétrie de révolution, avec un dispositif de basculement (3), lequel présente plus de deux positions de travail (A, B, C), ayant chacune une direction axiale ou une inclinaison axiale différente par rapport à la verticale, et un angle total de basculement ($\alpha$) du récipient d'au moins 106 degrés, de préférence 121 degrés, et qui peut être entraîné de manière rotative, à deux vitesses ou plus, autour de l'axe (21), le récipient métallurgique (2) présentant, dans la zone de basculement ($\alpha$), au moins une position de travail (B) pour le mélangeage rotatif de la fournée, dans laquelle l'axe de rotation (21) forme un angle ($\beta$) situé entre 85 et 45 degrés par rapport à la verticale, ainsi qu'une position de travail sensiblement verticale (A) pour l'application d'une accélération radiale de désintégration.

**5.** Procédé selon la revendication 4, **caractérisé en ce que** le récipient métallurgique (2) peut être entraîné, dans au moins une position de travail (B) prévue pour le mélangeage rotatif de la fournée, à une vitesse de rotation $N_1$ exprimée en sec$^{-1}$, laquelle est inférieure à la valeur de calcul selon la formule :

$$N_1 = Y \cdot \sqrt{\frac{2}{A}}$$

où Y est une constante de mélange égale à 12,12 et où la valeur A représente le diamètre intérieur du récipient exprimé en mètres.

**6.** Procédé selon l'une des revendications 4 ou 5, **caractérisé en ce que** le récipient métallurgique (2) peut être entraîné, dans la position de travail sensiblement verticale (A), par un entraînement (23) à une vitesse de rotation ($N_2$) qui est supérieure à la valeur de calcul selon la formule :

$$N_2 = X \cdot \sqrt{\frac{2}{A}}$$

où X est une constante de séparation égale à 28,55 et où la valeur A représente le diamètre intérieur du récipient exprimé en mètres.

**7.** Procédé selon l'une des revendications 4 à 6, **caractérisé en ce que,** pour le déversement de la phase métallique hors du récipient métallurgique (2) au moins, l'orifice de charge (23) de ce dernier peut être partiellement bouché par des moyens d'obturation (4).

Fig. 1

Fig. 2

Fig. 3